# EUROPÄISCHE PATENTSCHRIFT

(11) **EP 4 123 196 B1**
(45) Veröffentlichungstag und Bekanntmachung des Hinweises auf die Patenterteilung: **28.01.2026**
(21) Anmeldenummer: 22185883.0
(22) Anmeldetag: 20.07.2022
(51) Int. Cl.: F16H 1/22, F16H 57/12, F16H 57/022

(54) **GETRIEBE UND STELLANTRIEB**
TRANSMISSION AND ACTUATOR
TRANSMISSION ET ACTIONNEUR

(30) Priorität: 22.07.2021 DE 102021119063
(43) Veröffentlichungstag der Anmeldung: 25.01.2023
(73) Patentinhaber: AUMA Riester GmbH & Co. KG, 79379 Müllheim (DE)
(72) Erfinder: Hofmann, Benjamin, 79423 Heitersheim (DE)
(74) Vertreter: Mertzlufft-Paufler, Cornelius

(56) Entgegenhaltungen:
- EP-A1- 0 112 244
- DE-A1- 4 229 439
- DE-C- 385 431
- JP-A- S6 262 038
- US-A- 4 953 417

## Beschreibung

Die Erfindung betrifft ein Getriebe, mit einem eintreibenden Verzahnungsteil und einem abtreibenden Verzahnungsteil und einem ersten Getriebezug, der eine Bewegung des eintreibenden Verzahnungsteil an das abtreibende Verzahnungsteil überträgt.

Derartige Getriebe sind bekannt und werden beispielsweise bei Stellantrieben eingesetzt, um eine Drehzahl und/oder ein Drehmoment eines Motors an externe Anforderungen anzupassen.

Die Erfindung betrifft weiter einen Stellantrieb mit einem Motor und einer Abtriebswelle.

Stellantriebe sind bekannt und dienen dazu, mechanisch verstellbare Stelleinrichtungen, beispielsweise Armaturen oder Ventile oder dergleichen Mittel zum Steuern von Fluidströmen, beispielsweise Strömen von Wasser oder anderen Flüssigkeiten oder von Gasen, motorisch zu verstellen.

Aus der EP 0 112 244 A1 ist eine Weiterentwicklung von Motorantrieben bekannt, die ein Getriebe zum Antrieb einer Last verwenden oder nicht, um die Effizienz der Bewegungs-, Geschwindigkeits- und Positionsangabe zu erhöhen.

Aus der US 4953417 A ist ein mechanischer Zahnradantrieb bekannt, insbesondere ein mehrstufiger Zahnradantrieb, der zwischen einem antreibenden und einem abtreibenden Rad angeordnet ist.

Aus der JP S62 62038 A, auf welcher die zweiteilige Form basiert, ist eine Übertragungsvorrichtung für ein Steuergerät vorbekannt, bei dem die Drehrichtung während des Betriebs zwischen normal und rückwärts umgeschaltet wird.

Aus der DE 42 29 439 A1 ist ein Vorrichtung und ein Verfahren zur Lageregelung eines beweglichen Teils bekannt. Der Erfindung liegt die Aufgabe zugrunde, eine Vorrichtung zur Lageregelung mit einem Lagegeber, der einen inkrementellen Geber und einen Absolutwert-Geber enthält, anzugeben, bei der ein Anfahren von mechanischen Endanschlägen nicht auftritt. Weiterhin liegt der Erfindung die Aufgabe zugrunde, ein Verfahren zum Betreiben der Lageregelung anzugeben.

Aus der DE 385 431 C ist ein Zahnrädergetriebe bekannt.

Der Erfindung liegt die Aufgabe zugrunde, ein Getriebe mit verbesserten Gebrauchseigenschaften zu schaffen.

Zur Lösung der genannten Aufgabe sind erfindungsgemäß die Merkmale des Anspruchs 1 vorgesehen. Insbesondere wird somit zur Lösung der genannten Aufgabe bei einem Getriebe der eingangs beschriebenen Art erfindungsgemäß vorgeschlagen, dass ein zweiter Getriebezug ausgebildet ist, der zusätzlich zu dem ersten Getriebezug die Bewegung des eintreibenden Verzahnungsteils an das abtreibende Verzahnungsteil überträgt. Somit ist eine parallele Übertragung von Kräften oder Drehmomenten eingerichtet, aus der sich eine natürliche Überbestimmung ergibt. Die Erfindung macht sich die Erkenntnis zunutze, dass diese Überbestimmung zu einer Reduktion eines Spiels nutzbar ist. Dies lässt sich besonders vorteilhaft bei Getrieben einsetzen, die eine spielfreie Übertragung erfordern. Die Gebrauchseigenschaften sind somit verbessert.

Bei einer erfindungsgemäßen Ausgestaltung ist vorgesehen, dass eine Verspanneinrichtung ausgebildet ist, welche den ersten Getriebezug gegen den zweiten Getriebezug verspannt. Somit ist es ermöglicht, ein vorhandenes Spiel nach Bedarf zu vermindern oder ganz zu reduzieren.

Bei einer erfindungsgemäßen Ausgestaltung ist vorgesehen, dass die bereits erwähnte Verspanneinrichtung auf ein Verzahnungsteil des ersten Getriebezuges einwirkt. Somit ist eine einfache Methode beschrieben, eine Verspannung in den Getriebezug einzubringen.

Bei einer erfindungsgemäßen Ausgestaltung ist vorgesehen, dass die bereits erwähnte Verspanneinrichtung ein Rückstellelement hat. Somit ist eine flexible Verspannung einbringbar.

Bei einer vorteilhaften Ausgestaltung kann vorgesehen sein, dass die bereits erwähnte Verspanneinrichtung ein Verzahnungsteil, insbesondere das bereits erwähnte Verzahnungsteil, auf das die Verspanneinrichtung einwirkt, vorzugsweise axial beaufschlagt. Somit ist eine zumindest teilweise Entkopplung des Einbringens einer Verspannung vom Kraft- und/oder Drehmomentfluss im Getriebestrang einfach erreichbar.

Bei einer erfindungsgemäßen Ausgestaltung ist vorgesehen, dass die bereits erwähnte Verspanneinrichtung axial an das bereits erwähnte Verzahnungsteil, auf das die Verspanneinrichtung einwirkt, tragenden Welle angreift. Somit ist ein weiterer Freiheitsgrad nutzbar, um eine Verspannung einzubringen. Dies ist besonders günstig, wenn das Verzahnungsteil axial beweglich angeordnet ist.

Erfindungsgemäß ist vorgesehen, dass die Verspanneinrichtung zentrisch und/oder punktförmig angreift. Somit ist eine Drehbewegung des Verzahnungsteils möglichst wenig beeinträchtigbar.

Erfindungsgemäß ist vorgesehen, dass die Verspanneinrichtung mit einer federbeaufschlagten Kugel angreift. Somit ist ein einfaches Mittel beschrieben, welches ein Mitdrehen des Rückstellelements verzichtbar macht.

Bei einer vorteilhaften Ausgestaltung kann vorgesehen sein, dass das bereits erwähnte Verzahnungsteil auf das die Verspanneinrichtung einwirkt, aus Kunststoff gefertigt ist. Somit ist eine schmiermittelfreie Kopplung einrichtbar.

Insbesondere kann hierbei vorgesehen sein, dass der erste und/oder zweite Getriebezug aus Kunststoff gefertigt sind. Somit ist eine einfache Fertig 3a erreichbar.

Bei einer vorteilhaften Ausgestaltung kann vorgesehen sein, dass das bereits erwähnte Verzahnungsteil auf das die Verspanneinrichtung einwirkt, axial beweglich angeordnet ist. Somit ist eine Verspannung in den Getriebezug über einen zusätzlichen Freiheitsgrad einbringbar.

Bei einer vorteilhaften Ausgestaltung kann vorgesehen sein, dass das bereits erwähnte Verzahnungsteil auf das die Verspanneinrichtung einwirkt und/oder das axial beweglich ist, eine Schrägverzahnung aufweist. Somit ist eine axiale Bewegung einfach in eine Verspannung des ersten Getriebezuges umsetzbar.

Hierbei kann vorgesehen sein, dass ein Schrägungswinkel so gewählt ist, dass eine Selbsthemmung erreicht ist. Somit ist ein Rückwärtsantrieb der Verspanneinrichtung verhinderbar.

Bei einer vorteilhaften Ausgestaltung kann vorgesehen sein, dass das bereits erwähnte Verzahnungsteil auf das die Verspanneinrichtung einwirkt und/oder das axial beweglich ist, mit einem weiteren Verzahnungsteil drehfest verbunden ist. Somit ist eine Durchleitung eines Drehmoments entlang des ersten Getriebezuges einfach erreichbar.

Bei einer vorteilhaften Ausgestaltung kann vorgesehen sein, dass das bereits erwähnte Verzahnungsteil auf das die Verspanneinrichtung einwirkt und/oder das axial beweglich ist, mit einem Gegenverzahnungsteil kämmt, zu dem es axial beweglich angeordnet ist.

Bei einer vorteilhaften Ausgestaltung kann vorgesehen sein, dass der ersten Getriebezug oder der zweite Getriebezug als Zahnradgetriebe ausgebildet ist. Somit ist die Erfindung in einem wichtigen Anwendungsfall nutzbar.

Besonders günstig ist es, wenn beide Getriebezüge als Zahnradgetriebe ausgebildet sein.

Bei einer vorteilhaften Ausgestaltung kann vorgesehen sein, dass der erste Getriebezug und der zweite Getriebezug paarweise übereinstimmende Verzahnungsteile aufweisen. Somit ist ein einfacher Aufbau realisierbar. Eine Teilevielfalt ist reduzierbar.

Bei einer vorteilhaften Ausgestaltung kann vorgesehen sein, dass der erste Getriebezug und der zweite Getriebezug eine übereinstimmende Anzahl von Getriebestufen aufweisen. Somit ist ein synchroner Betrieb der Getriebezüge einfach erreichbar.

Bei einer vorteilhaften Ausgestaltung kann vorgesehen sein, dass der erste Getriebezug und der zweite Getriebezug ein übereinstimmendes Übersetzungsverhältnis realisieren. Somit ist eine Redundanz gebildet, die zu einer Verspannung der Getriebezüge gegeneinander nutzbar ist.

Bei einer vorteilhaften Ausgestaltung kann vorgesehen sein, dass das eintreibende Verzahnungsteil als ein Zahnrad ausgebildet ist. Somit ist eine Drehbewegung spielfrei oder spielarm in eine weitere Bewegung umsetzbar.

Bei einer vorteilhaften Ausgestaltung kann vorgesehen sein, dass das abtreibende Verzahnungsteil als ein Zahnrad ausgebildet ist. Somit ist eine weitere Bewegung spielfrei oder spielarm in eine Drehbewegung umsetzbar.

Besonders günstig ist es, wenn beide Verzahnungsteile jeweils als ein Zahnrad ausgebildet sind. Somit ist eine Drehbewegung spielfrei oder zumindest spielarm in eine Drehbewegung umsetzbar.

Zur Lösung der Aufgabe schlägt die Erfindung weiter bei einem Stellantrieb die Merkmale des ersten unabhängigen, auf einen Stellantriebe gerichteten Anspruchs vor. Insbesondere wird somit zur Lösung der genannten Aufgabe bei einem Stellantrieb der eingangs beschriebenen Art vorgeschlagen, dass zwischen dem Motor und der Abtriebswelle ein erfindungsgemäßes Getriebe, wie beansprucht, angeordnet ist. Somit ist ein spielfreier oder zumindest spielarmer Antrieb möglich. Die Gebrauchseigenschaften eines Stellantriebs sind somit verbessert.

Gemäß einer Ausgestaltung kann vorgesehen sein, dass bei einem Stellantrieb, der einen Motor und eine Abtriebswelle hat, wobei zwischen dem Motor und der Abtriebswelle ein erfindungsgemäßes Getriebe angeordnet sein kann, wobei eine Positionsmesseinrichtung vorgesehen ist, die ein AB-Signal in Abhängigkeit von einer Bewegung des Motors ausgibt, wobei die Positionsmesseinrichtung einen Absolutwertgeber und einen Signalumwandler hat und der Signalumwandler zu einer Erzeugung eines AB-Signals aus einem Absolutwert des Absolutwertgebers eingerichtet ist.

Die Positionsmesseinrichtung ist vorzugsweise im Antriebsstrang des Motors angeordnet, beispielsweise an einer Motorwelle, an einer Zwischenwelle oder an der Abtriebswelle. Somit ist ein Signal simulierbar, das beispielsweise zu einer Steuerung verwendbar ist, auf der Verwendung von AB-Sensoren beruht. Somit ist beispielsweise ein Motor, ein Stellantrieb oder eine Positionsmesseinrichtung austauschbar, ohne dass eine Steuerung oder Regelung angepasst werden muss. Die Gebrauchseigenschaften eines Stellantriebs sind somit verbessert.

Ein AB-Signal kann beispielsweise als ein Paar von zeitlich zueinander versetzten Pulsfolgen charakterisiert werden, wobei eine Pulsfolge inkrementell zu einer Positionsbestimmung einer Bewegung verwendbar ist und aus der zeitlich versetzten Pulsfolge ein Richtungssinn der Bewegung ableitbar ist.

Bei einer vorteilhaften Ausgestaltung kann vorgesehen sein, dass der Signalumwandler zur Generierung wenigstens eines Endlagensignals eingerichtet ist. Somit sind weitere Funktionalitäten des AB-Signals simulierbar.

Dass Endlagensignal kann beispielsweise mit einer abweichenden Impulslänge und/oder mit einer abweichenden Impulspausenlänge angezeigt sein. Dies stellt eine besonders einfach erzeugbare und/oder auswertbare Markierung von Endlagen dar.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche, so wie durch die angehängten Ansprüche definiert.

Es zeigt
- Fig. 1: einen erfindungsgemäßen Stellantrieb in einer dreidimensionalen Schrägansicht von oben,
- Fig. 2: ein Getriebe des Stellantriebs aus Fig. 1 mit Motor in einer Schrägansicht von unten,
- Fig. 3: das Getriebe aus Fig. 2 ohne Motor in einer Schrägansicht von oben und gegenüber Fig. 1 um ca. 180° gedreht,
- Fig. 4: das Getriebe aus Fig. 2 in einer dreidimensionalen Seitenansicht,
- Fig. 5: eine Prinzipdarstellung einer Positionsmesseinrichtung und
- Fig. 6: eine Prinzipdarstellung eines mit der Positionsmesseinrichtung nach Fig. 5 erzeugten AB- Signals.

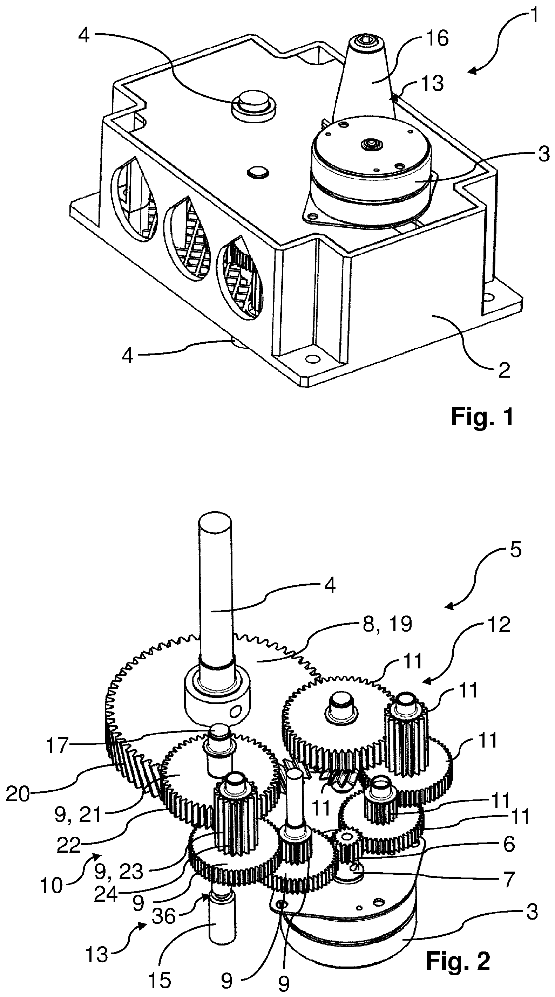

Die Figuren 1 bis 4 werden im Folgenden gemeinsam beschrieben.

Ein in Fig. 1 dargestellter und im Ganzen mit 1 bezeichneter Stellantrieb hat ein Gehäuse 2, einen Motor 3 (im Beispiel einen Elektromotor) und eine Abtriebswelle 4, die durch den Motor 3 antreibbar ist.

Im Inneren des Gehäuses 2 ist ein Getriebe 5 angeordnet, das in den Fig. 2 bis 4 näher dargestellt ist.

Das Getriebe 5 hat ein eintreibendes Verzahnungsteil 6, das auf einer Motorwelle 7 des Motors 3 drehfest angeordnet ist.

Das Getriebe 5 hat weiter ein abtreibendes Verzahnungsteil 8, das auf der Abtriebswelle 4 drehfest angeordnet ist. Das Getriebe 5 überträgt eine Drehbewegung des Motors 3 an die Abtriebswelle 4.

Zwischen dem eintreibenden Verzahnungsteil 6 und dem abtreibenden Verzahnungsteil 8 sind Verzahnungsteile 9 angeordnet, die miteinander paarweise kämmen und somit einen ersten Getriebezug 10 bilden

Zwischen dem eintreibenden Verzahnungsteil 6 und dem abtreibenden Verzahnungsteil 8 sind außerdem Verzahnungsteile 11 angeordnet, die miteinander paarweise kämmen und somit einen zweiten Getriebezug 12 bilden.

Der erste Getriebezug 10 und der zweite Getriebezug 11 starten am eintreibenden Verzahnungsteil 6 und enden am abtreibenden Verzahnungsteil 8 und übertragen somit die Drehbewegung des Motors 3 an die Abtriebswelle 4 parallel und redundant.

Eine Verspanneinrichtung 13 greift an einem Verzahnungsteil 14 an. Hierzu drückt ein Rückstellelement 15, das unter einer Abdeckung 16 angeordnet ist, im Beispiel eine Feder, axial auf eine Welle 17. Die Welle 17 trägt das Verzahnungsteil 14 und ist axial verschieblich angeordnet.

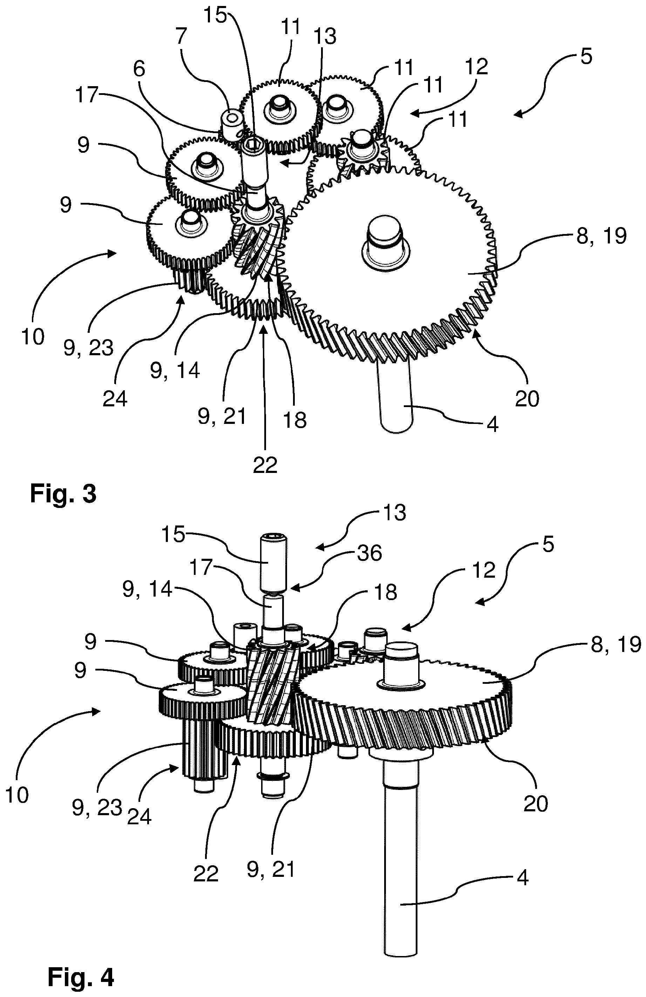

Hierbei ist zwischen dem Rückstellelement 15 und der Welle 17 eine Kugel 36 (vgl. Fig. 4) angeordnet, welche die Welle 17 zentrisch und punktförmig kontaktiert.

Das Verzahnungsteil 14 hat eine Schrägverzahnung 18 und kämmt mit einem Gegenverzahnungsteil 19 mit entsprechender Schrägverzahnung 20. Durch den Schrägungswinkel der Schrägverzahnung 18 wird eine axiale Bewegung der Welle 17 in eine Relativdrehung des Verzahnungsteils 14 gegen das Gegenverzahnungsteil 19 umgesetzt.

Auf der Welle 17 ist ein weiteres Verzahnungsteil 21 drehfest angeordnet, welches durch die axiale Bewegung der Welle 17 ebenfalls axial verschoben wird.

Das weitere Verzahnungsteil 21 weist eine Geradverzahnung 22 auf und kämmt mit einem Nachbarverzahnungsteil 23, das ebenfalls eine Geradverzahnung 24 hat.

Bei der erwähnten axialen Verstellung verschiebt sich daher das weitere Verzahnungsteil 21 axial relativ zu dem Nachbarverzahnungsteil 23, ohne das eine Relativdrehung erzwungen wird.

Die erwähnte Relativdrehung zwischen dem Verzahnungsteil 14 und dem Gegenverzahnungsteil 19 überträgt sich über den zweiten Getriebezug 12 und auf das Nachbarverzahnungsteil 23.

Da das weitere Verzahnungsteil 21 und das Verzahnungsteil 14 unterschiedliche Schrägungswinkel realisieren, ergibt sich somit eine Verspannung des ersten Getriebezuges 10 gegen den zweiten Getriebezug 12 unabhängig von einer Rotationsbewegung der Verzahnungsteile 9, 11 des Getriebes 5. Somit ist ein Spiel zwischen dem Motor 3 und der Abtriebswelle 4 eliminiert.

Dies hat zur Folge, dass eine Drehposition der Abtriebswelle 4 durch eine Drehposition der Motorwelle 7 fehlerfrei vorgebbar ist.

Im Ausführungsbeispiel sind die Verzahnungsteile 6, 8, 9, 11 als Zahnräder ausgebildet. Das Getriebe 5 ist somit ein Zahnradgetriebe. Die Verzahnungsteile 6, 8, 9, 11 sind vorteilhaft aus Kunststoff gefertigt, so dass sich ein schmierstofffreies Getriebe 5 ergeben kann.

In den Fig. 2 bis 4 ist ersichtlich, dass jedem Verzahnungsteil 9 des Getriebezuges 10 ein Verzahnungsteil 11 des zweiten Getriebezuges 12 entspricht, das zu diesem baugleich ist und das an derselben Position sitzt. Somit weisen beide Getriebezüge 10, 12 eine übereinstimmende Anzahl von Getriebestufen und paarweise übereinstimmende Verzahnungsteile 9, 11 auf. Die Übersetzungsverhältnisses der beiden Getriebezüge 10, 12 sind identisch.

Bei weiteren Ausführungsbeispielen sind die Getriebezüge 10, 12 voneinander abweichend ausgebildet.

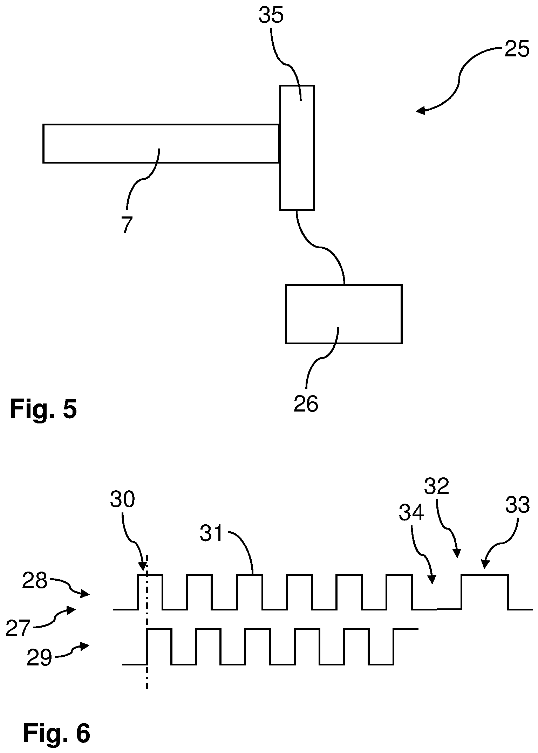

Fig. 5 zeigt in einer Prinzipdarstellung die Positionsbestimmung der Motorwelle 7.

Eine Positionsmesseinrichtung 25 ist als Absolutwertgeber 35 eingerichtet und gibt ihre Messwerte an einen Signalumwandler 26.

Der Signalumwandler 26 setzt die empfangenen Messwerte, die jeweils eine absolute Drehposition der Motorwelle 7 oder der Abtriebswelle 4 bezeichnen, in ein (inkrementelles) AB-Signal 27 gemäß Fig. 6 um.

Das AB-Signal 27 wird hierbei als eine A-Spur 28 und eine B-Spur 29 generiert, die in an sich bekannter Weise zueinander um einen Zeitversatz 30 zeitlich versetzt sind und jeweils Pulsfolgen darstellen, deren Pulse 31 eine Bewegung der Motorwelle 7 um einen bestimmten Drehwinkel anzeigen. Je nachdem, ob sich die Motorwelle 7 oder der Abtriebswelle 4 links- oder rechtsherum dreht, kommen die Pulse 31 der A-Spur 28 oder der B-Spur 29 eher, ergibt sich also ein positiver oder negativer Zeitversatz 30. Der Drehsinn wird hierbei durch einen Vergleich des aktuellen Absolutwertes mit einem Vorgängerwert bestimmt.

Eine abweichende Impulslänge 33 und eine abweichende Impulspausenlänge 34 wird von dem Signalumwandler 26 zur Generierung eines Endlagensignals 32 verwendet, wenn ein hinterlegter Absolutwert der Motorwelle 7 oder der Abtriebswelle 4 (beispielsweise nach einer Ausführung einer vorgegebenen Anzahl von vollen Umdrehungen) erreicht ist.

Bei einem Getriebe 5 wird somit vorgeschlagen, zwei parallel zueinander parallel verlaufende Getriebezüge 10, 12 zwischen einem eintreibenden Verzahnungsteil 6 und einem abtreibenden Verzahnungsteil 8 auszubilden.

### Bezugszeichenliste

- 1: Stellantrieb
- 2: Gehäuse
- 3: Motor
- 4: Abtriebswelle
- 5: Getriebe
- 6: eintreibendes Verzahnungsteil
- 7: Motorwelle
- 8: abtreibendes Verzahnungsteil
- 9: Verzahnungsteil
- 10: erster Getriebezug
- 11: Verzahnungsteil
- 12: zweiter Getriebezug
- 13: Verspanneinrichtung
- 14: Verzahnungsteil
- 15: Rückstellelement
- 16: Abdeckung
- 17: Welle
- 18: Schrägverzahnung
- 19: Gegenverzahnungsteil
- 20: Schrägverzahnung
- 21: weiteres Verzahnungsteil
- 22: Geradverzahnung
- 23: Nachbarverzahnungsteil
- 24: Geradverzahnung
- 25: Positionsmesseinrichtung
- 26: Signalumwandler
- 27: AB-Signal
- 28: A-Spur
- 29: B-Spur
- 30: Zeitversatz
- 31: Puls
- 32: Endlagensignal
- 33: Impulslänge
- 34: Impulspausenlänge
- 35: Absolutwertgeber
- 36: Kugel

## Patentansprüche

1. Getriebe (5), mit einem eintreibenden Verzahnungsteil (6) und einem abtreibenden Verzahnungsteil (8) und einem ersten Getriebezug (10), der eine Bewegung des eintreibenden Verzahnungsteil (6) an das abtreibende Verzahnungsteil (8) überträgt, **wobei** ein zweiter Getriebezug (12) ausgebildet ist, der zusätzlich zu dem ersten Getriebezug (10) die Bewegung des eintreibenden Verzahnungsteils (6) an das abtreibende Verzahnungsteil (8) überträgt, wobei eine Verspanneinrichtung (13) ausgebildet ist, welche den ersten Getriebezug (10) gegen den zweiten Getriebezug (12) verspannt, und die Verspanneinrichtung (13) ein Rückstellelement hat, sodass eine flexible Verspannung einbringbar ist, **dadurch gekennzeichnet, dass** die Verspanneinrichtung (13) auf ein Verzahnungsteil (14) des ersten Getriebezuges (10) einwirkt und dass die Verspanneinrichtung (13) axial an einer das Verzahnungsteil (14) tragenden Welle (17) mit einer federbeaufschlagten Kugel (36) zentrisch und/oder punktförmig angreift.

2. Getriebe (5) nach dem vorangehenden Anspruch, **dadurch gekennzeichnet, dass** die Verspanneinrichtung (13) das Verzahnungsteil (14) vorzugsweise axial beaufschlagt.

3. Getriebe (5) nach einem der vorangehenden Ansprüche, **dadurch gekennzeichnet, dass** das Verzahnungsteil (14), insbesondere der erste Getriebezug (10) und/oder der zweite Getriebezug (12), aus Kunststoff gefertigt ist/sind.

4. Getriebe (5) nach einem der vorangehenden Ansprüche, **dadurch gekennzeichnet, dass** das Verzahnungsteil (14) axial beweglich angeordnet ist.

5. Getriebe (5) nach einem der vorangehenden Ansprüche, **dadurch gekennzeichnet, dass** das Verzahnungsteil (14) eine Schrägverzahnung (18) aufweist, insbesondere wobei ein Schrägungswinkel so gewählt ist, dass eine Selbsthemmung erreicht ist.

6. Getriebe (5) nach einem der vorangehenden Ansprüche, **dadurch gekennzeichnet, dass** das Verzahnungsteil (14) mit einem weiteren Verzahnungsteil (21) drehfest verbunden ist.

7. Getriebe (5) nach einem der vorangehenden Ansprüche, **dadurch gekennzeichnet, dass** das Verzahnungsteil (14) mit einem Gegenverzahnungsteil (19) kämmt, zu dem es axial beweglich angeordnet ist.

8. Getriebe (5) nach einem der vorangehenden Ansprüche, **dadurch gekennzeichnet, dass** der ersten Getriebezug (10) und/oder der zweite Getriebezug (12) als Zahnradgetriebe ausgebildet ist/sind.

9. Getriebe (5) nach einem der vorangehenden Ansprüche, **dadurch gekennzeichnet, dass** der erste Getriebezug (10) und der zweite Getriebezug (12) paarweise übereinstimmende Verzahnungsteile (9, 11) und/oder eine übereinstimmende Anzahl von Getriebestufen aufweisen.

10. Getriebe (5) nach einem der vorangehenden Ansprüche, **dadurch gekennzeichnet, dass** der erste Getriebezug (10) und der zweite Getriebezug (12) ein übereinstimmendes Übersetzungsverhältnis realisieren.

11. Getriebe (5) nach einem der vorangehenden Ansprüche, **dadurch gekennzeichnet, dass** das eintreibende Verzahnungsteil (6) und/oder das abtreibende Verzahnungsteil (8) als ein Zahnrad ausgebildet ist/sind.

12. Stellantrieb (1) mit einem Motor (3) und einer Abtriebswelle (4), **dadurch gekennzeichnet, dass** zwischen dem Motor (3) und der Abtriebswelle (4) ein Getriebe (5) nach einem der vorangehenden Ansprüche angeordnet ist.

13. Stellantrieb (1) nach dem vorangehenden Anspruch 12, wobei eine Positionsmesseinrichtung (25) vorgesehen ist, die ein AB-Signal (27) in Abhängigkeit von einer Bewegung des Motors (3) ausgibt, **dadurch gekennzeichnet, dass** die Positionsmesseinrichtung (25) einen Absolutwertgeber (35) und einen Signalumwandler (26) hat und dass der Signalumwandler (26) zu einer Erzeugung des AB-Signals (27) aus einem Absolutwert des Absolutwertgebers (35) eingerichtet ist.

14. Stellantrieb (1) nach Anspruch 13, **dadurch gekennzeichnet, dass** der Signalumwandler (26) zur Generierung wenigstens eines Endlagensignals (32), insbesondere mit einer abweichenden Impulslänge (33) und/oder mit einer abweichenden Impulspausenlänge (34), eingerichtet ist.

## Claims

1. Gear (5) having a driving toothed part (6) and a driven toothed part (8) and a first gear train (10) that transmits a movement of the driving toothed part (6) to the driven toothed part (8), **wherein** a second gear train (12) is formed which, in addition to the first gear train (10), transmits the movement of the driving toothed part (6) to the driven toothed part (8), wherein a clamping device (13) is formed which clamps the first gear train (10) against the second gear train (12), and the clamping device (13) has a return element so that flexible clamping can be introduced, **characterized in that** the clamping device (13) acts on a toothed part (14) of the first gear train (10) and **in that** the clamping device (13) acts axially on a shaft (17) carrying the toothed part (14) with a spring-loaded ball (36) centrically and/or at a single point.

2. Gear (5) according to the preceding claim, **characterized in that** the clamping device (13) preferably acts axially on the toothed part (14).

3. Gear (5) according to one of the preceding claims, **characterized in that** the toothed part (14), in particular the first gear train (10) and/or the second gear train (12), is/are made of plastic.

4. Gear (5) according to one of the preceding claims, **characterized in that** the toothed part (14) is arranged to be axially movable.

5. Gear (5) according to one of the preceding claims, **characterized in that** the toothed part (14) has helical teeth (18), in particular wherein a helix angle is selected such that self-locking is achieved.

6. Gear (5) according to one of the preceding claims, **characterized in that** the toothed part (14) is connected in a rotationally fixed manner to a further toothed part (21).

7. Gear (5) according to one of the preceding claims, **characterized in that** the toothed part (14) meshes with a counter-toothed part (19) relative to which it is arranged to be axially movable.

8. Gear (5) according to one of the preceding claims, **characterized in that** the first gear train (10) and/or the second gear train (12) is/are designed as a gear drive.

9. Gear (5) according to one of the preceding claims, **characterized in that** the first gear train (10) and the second gear train (12) have pairs of matching gear parts (9, 11) and/or a matching number of gear stages.

10. Gear (5) according to one of the preceding claims, **characterized in that** the first gear train (10) and the second gear train (12) realize a matching transmission ratio.

11. Gear (5) according to one of the preceding claims, **characterized in that** the driving toothed part (6) and/or the driven toothed part (8) is/are designed as a gearwheel.

12. Actuator (1) having a motor (3) and an output shaft (4), **characterized in that** a gear (5) according to one of the preceding claims is arranged between the motor (3) and the output shaft (4).

13. Actuator (1) according to the preceding claim 12, wherein a position measuring device (25) is provided which outputs an AB signal (27) depending on a movement of the motor (3), **characterized in that** the position measuring device (25) has an absolute value encoder (35) and a signal converter (26), and **in that** the signal converter (26) is designed to generate the AB signal (27) from an absolute value of the absolute value encoder (35).

14. Actuator (1) according to claim 13, **characterized in that** the signal converter (26) is designed to generate at least one end position signal (32), in particular with a deviating pulse length (33) and/or with a deviating pulse pause length (34).

## Revendications

1. Transmission (5) comprenant une partie de denture d'entrée (6) et une partie de denture de sortie (8) et une première chaîne de transmission (10) qui transmet un mouvement de la partie de denture d'entrée (6) à la partie de denture de sortie (8), dans laquelle est formée une deuxième chaîne de transmission (12) qui transmet le mouvement de la partie de denture d'entrée (6) à la partie de denture de sortie (8) en plus de la première chaîne de transmission (10), dans laquelle est formé un dispositif de tension (13) qui tend la première chaîne de transmission (10) vers la deuxième chaîne de transmission (12), et le dispositif de tension (13) possède un élément de rappel, de sorte qu'une tension flexible peut être imprimée, **caractérisée en ce que** le dispositif de tension (13) agit sur une partie de denture (14) de la première chaîne de transmission (10) et **en ce que** le dispositif de tension (13) se met en prise axialement sur un arbre (17) portant la partie de denture (14), de façon centrée et/ou en un point, avec une bille (36) contrainte par un ressort.

2. Transmission (5) selon la revendication précédente, **caractérisée en ce que** le dispositif de tension (13) agit de préférence sur la partie de denture (14) dans le sens axial.

3. Transmission (5) selon l'une des revendications précédentes, **caractérisée en ce que** la partie de denture (14), en particulier la première chaîne de transmission (10) et/ou la deuxième chaîne de transmission (12), est (sont) fabriquée(s) en matière plastique.

4. Transmission (5) selon l'une des revendications précédentes, **caractérisée en ce que** la partie de denture (14) est disposée de façon mobile dans le sens axial.

5. Transmission (5) selon l'une des revendications précédentes, **caractérisée en ce que** la partie de denture (14) comporte une denture oblique (18), en particulier avec un angle de denture choisie de telle façon qu'elle soit autobloquante.

6. Transmission (5) selon l'une des revendications précédentes, **caractérisée en ce que** la partie de denture (14) est reliée de façon solidaire en rotation avec une autre partie de denture d'entrée (21).

7. Transmission (5) selon l'une des revendications précédentes, **caractérisée en ce que** la partie de denture (14) engrène avec une partie de denture opposée (19) par rapport à laquelle elle est disposée de façon mobile dans le sens axial.

8. Transmission (5) selon l'une des revendications précédentes, **caractérisée en ce que** la première chaîne de transmission (10) et/ou la deuxième chaîne de transmission (12) sont conformées comme une transmission à roues dentées.

9. Transmission (5) selon l'une des revendications précédentes, **caractérisée en ce que** la première chaîne de transmission (10) et la deuxième chaîne de transmission (12) comportent des parties de denture (9, 11) qui se correspondent deux par deux et/ou un nombre correspondant d'étages de transmission.

10. Transmission (5) selon l'une des revendications précédentes, **caractérisée en ce que** la première chaîne de transmission (10) et la deuxième chaîne de transmission (12) réalisent un rapport de multiplication qui se correspond.

11. Transmission (5) selon l'une des revendications précédentes, **caractérisée en ce que** la partie de denture d'entrée (6) et/ou la partie de denture de sortie (8) sont conçues comme une roue dentée.

12. Actionneur (1) muni d'un moteur (3) et d'un arbre de sortie (4), **caractérisé en ce qu'**une transmission (5) selon l'une des revendications précédentes est disposée entre le moteur (3) et l'arbre de sortie (4).

13. Actionneur (1) selon la revendication 12, dans lequel est prévu une installation de mesure de la position (25) qui émet un signal AB (27) en fonction d'un mouvement du moteur (3), **caractérisé en ce que** l'installation de mesure de la position (25) possède un générateur de valeurs absolues (35) et un convertisseur de signaux (26) et **en ce que** le convertisseur de signaux (26) est configuré pour générer le signal AB (27) à partir d'une valeur absolue du générateur de valeurs absolues (35).

14. Actionneur (1) selon la revendication 13, **caractérisée en ce que** le convertisseur de signaux (26) est configuré pour générer au moins un signal de position finale (32), ayant en particulier une durée d'impulsions (33) différente et/ou une durée de pause entre impulsions (34) différente.
